# FASCICULE DE BREVET EUROPEEN

(11) **EP 4 448 941 B1**
(45) Date de publication et mention de la délivrance du brevet: **26.11.2025**
(21) Numéro de dépôt: 22835638.2
(22) Date de dépôt: 12.12.2022
(51) Int. Cl.: F02C 6/20, F02C 7/20, F02K 3/02, F01D 5/14

(54) **TURBOMACHINE NON CARÉNÉE COMPRENANT DES AUBES DE STATOR PRÉSENTANT DES CORDES DIFFÉRENTES**
MANTELLOSES TURBINENTRIEBWERK MIT STATORSCHAUFELN MIT UNTERSCHIEDLICHEN SEHNEN
UNDUCTED TURBINE ENGINE COMPRISING STATOR BLADES HAVING DIFFERENT CHORDS

(30) Priorité: 13.12.2021 FR 2113370
(43) Date de publication de la demande: 23.10.2024
(73) Titulaire: SAFRAN AIRCRAFT ENGINES, 75015 Paris (FR)
(72) Inventeur: LEBEAULT, Eva Julie, 77550 MOISSY-CRAMAYEL (FR); SOULAT, Laurent, 77550 MOISSY-CRAMAYEL (FR)
(74) Mandataire: Argyma
(86) Numéro de dépôt international: PCT/EP2022/085288
(87) Numéro de publication internationale: WO 2023/110701

(56) Documents cités:
- FR-A1- 2 681 644
- FR-A1- 3 083 207
- FR-A1- 3 092 868

## Description

### Domaine technique

La présente invention concerne le domaine des turbomachines utilisées pour la propulsion d'un aéronef et concerne plus particulièrement un stator d'une turbomachine non carénée.

De manière connue, un aéronef comprend une turbomachine s'étendant longitudinalement selon un axe et permettant de déplacer l'aéronef à partir d'un flux d'air circulant d'amont en aval. Par la suite, les termes « amont » et « aval » sont définis par rapport à l'axe longitudinal orienté d'amont en aval. De même, les termes « intérieur » et « extérieur » sont définis selon la direction radiale par rapport à l'axe.

La turbomachine comprend une veine primaire délimitée par un carter, désigné « carter inter-veine » et alimentée par une soufflante amont. La soufflante permet de produire un flux d'air primaire à l'intérieur du carter inter-veine et un flux d'air secondaire autour du carter inter-veine. La soufflante, également désignée « rotor », est montée rotative autour de l'axe longitudinal et permet d'accélérer le flux d'air d'amont vers l'aval.

La turbomachine comporte une soufflante non carénée, dépourvue de carter extérieur, connue de l'homme du métier sous la désignation « open rotor ». Une telle turbomachine présente l'avantage d'avoir une masse réduite en l'absence de carter extérieur. Autrement dit, le flux d'air secondaire circulant à l'extérieur du carter inter-veine circule dans une veine secondaire ouverte vers l'extérieur.

De manière connue, la turbomachine comporte en aval de la soufflante un stator permettant de redresser le flux d'air accéléré par la soufflante. Le stator comprend une pluralité d'aubes de stator, également désignées « redresseurs », s'étendant radialement entre un pied relié au carter inter-veine et une tête libre.

Une fonction principale d'un stator est de dévier la direction du flux d'air afin de modifier l'énergie cinétique de manière à ce qu'elle soit exploitable pour la poussée de la turbomachine. Le stator permet ainsi de réduire les pertes aérodynamiques, assurer un bon rendement de la turbomachine et garantir une robustesse à la prise d'incidence du flux d'air afin d'assurer la stabilité de fonctionnement de la turbomachine. De manière connue, les aubes de stator possèdent une géométrie précise et prédéfinie permettant d'assurer au mieux les fonctions précitées. Les aubes de stator sont dimensionnées de manière à présenter une section et une orientation prédéfinies pour optimiser la déviation du flux d'air. En pratique, toutes les aubes de stator possèdent la même longueur, la même corde ainsi que, à chaque instant, le même calage.

Une turbomachine non carénée présente l'inconvénient d'être sensible à l'incidence du flux d'air extérieur par comparaison à une turbomachine carénée comme un turboréacteur. La présence d'un obstacle aérodynamique par exemple, comme une aile ou un mât de liaison reliant la turbomachine au fuselage de l'aéronef peut entrainer un écoulement d'air hétérogène pouvant affecter les performances de la turbomachine.

L'invention vise ainsi à éliminer au moins certains de ces inconvénients en proposant une turbomachine non carénée ayant une poussée optimale, même en présence d'un obstacle à proximité de la turbomachine.

On connait du document FR3092868 un turboréacteur (turbomachine carénée) comprenant dans une veine secondaire une roue de stator comprenant des aubes présentant des cordes différentes. Les cordes différentes permettent de caractériser chaque aube dans une fonction précise. En particulier, chaque aube de la roue de stator décrite dans le document FR3092868 a pour but par exemple d'améliorer la reprise et la transmission des efforts dans la turbomachine ou encore d'améliorer l'échange de chaleur entre un flux d'air primaire chaud circulant dans la veine primaire et un flux d'air secondaire froid circulant dans la veine secondaire. On connait également du document FR3083207, un ensemble propulsif dans lequel l'une des aubes de stator est reliée physiquement au pylône.

### PRESENTATION DE L'INVENTION

L'invention concerne un aéronef comprenant :
- au moins une turbomachine non carénée pour la propulsion de l'aéronef, la turbomachine s'étendant selon un axe longitudinal et étant configurée pour accélérer un flux d'air circulant d'amont en aval, la turbomachine comprenant un rotor et un stator, monté en aval du rotor, le stator comprenant une pluralité d'aubes de stator pour redresser le flux d'air issu du rotor, s'étendant radialement par rapport à l'axe longitudinal et réparties angulairement autour de l'axe longitudinal, chaque aube de stator comprenant un bord d'attaque et un bord de fuite définissant entre eux une corde dans un plan de révolution défini par rapport à l'axe longitudinal, chaque aube de stator étant définie, dans un plan transversal à l'axe longitudinal, par une position angulaire,
- au moins un obstacle aérodynamique, positionné à proximité de la turbomachine, l'obstacle aérodynamique entrainant une modification de la circulation du flux d'air.

L'aéronef est remarquable en ce que le stator de la turbomachine comprend des aubes de stator ayant une première corde, appelées aubes classiques, et au moins une aube de stator ayant une deuxième corde, plus grande que la première corde, appelée aube allongée, ladite au moins une aube allongée étant positionnée dans une plage angulaire d'interférence définie en regard de l'obstacle aérodynamique, de manière à augmenter le redressement du flux d'air issu du rotor dans la plage angulaire d'interférence.

Par l'expression « en regard », on entend que l'aube allongée et l'obstacle aérodynamique sont alignés par rapport à l'axe longitudinal.

Un tel aéronef permet d'adapter la géométrie de chaque aube de stator en fonction de sa position angulaire sur le stator, de manière à adapter la répartition de charge de chaque aube de stator en fonction de sa proximité avec un obstacle aérodynamique. Une aube allongée en vis à vis de l'obstacle aérodynamique lui permet en effet de supporter une charge plus importante due à l'obstacle aérodynamique qui perturbe le flux d'air traversant la turbomachine. Une telle turbomachine permet ainsi de limiter le risque de surcharge locale du stator et donc le risque de décollement aérodynamique.

De manière préférée, la au moins une aube allongée est positionnée uniquement dans la plage angulaire d'interférence définie en regard de l'obstacle aérodynamique. Dans cette forme de réalisation, l'ensemble des aubes positionnées dans une plage angulaire hors de la plage angulaire d'interférence est une aube ayant une corde inférieure ou égale à la corde des aubes classiques.

De manière préférée, l'aéronef comprenant un mât de liaison de la turbomachine à l'aéronef, ledit mât forme l'obstacle aérodynamique. Ainsi le stator de la turbomachine présente une aube allongée en regard du mât de liaison, permettant d'améliorer les performances du stator à proximité. La turbomachine est ainsi plus efficace et permet un effort de poussée plus important tout en limitant sa consommation.

De préférence, le stator comprend au moins deux aubes allongées positionnées dans la plage angulaire d'interférence, en regard de l'obstacle aérodynamique, permettant d'adapter la corde de plusieurs aubes de stator pour optimiser la géométrie complète du stator et adapter la corde de plusieurs aubes de stator au chargement qu'elles subissent.

De manière préférée, aucune aube allongée n'est positionnée en dehors de la plage angulaire d'interférence, ce qui permet de limiter tout risque de sous-charge d'une aube dont la corde serait trop grande au regard du flux d'air qu'elle reçoit. Une aube présentant une corde localement trop grande risquerait de pénaliser l'ensemble propulsif en l'alourdissant inutilement.

De manière préférée, les positions angulaires étant définies suivant un sens de rotation horaire sur une plage angulaire de 0° à 360°, dont la position angulaire 0° étant définie en position haute par rapport à un axe vertical, l'obstacle aérodynamique s'étendant sensiblement autour d'une position angulaire β, au moins une majorité des aubes de stator positionnées à une position angulaire comprise entre -45° et +45° autour de la position angulaire β sont des aubes allongées. Ainsi plusieurs aubes positionnées au moins en partie en regard de l'obstacle aérodynamique présentent une corde allongée, permettant d'adapter la corde de plusieurs aubes du stator pour optimiser la géométrie complète du stator et adapter la corde de plusieurs aubes au chargement qu'elles subissent. Une telle amplitude de -45° à +45° permet en outre d'englober sensiblement l'ensemble des aubes positionnées au moins en partie en regard de l'obstacle aérodynamique.

Dans une forme de réalisation, les positions angulaires étant définies suivant un sens de rotation horaire sur une plage angulaire de 0° à 360°, dont la position angulaire 0° étant définie en position haute par rapport à un axe vertical, l'obstacle aérodynamique s'étendant sensiblement autour d'une position angulaire β, l'ensemble des aubes de stator positionnées à une position angulaire comprise entre -45° et +45° autour de la position angulaire β sont des aubes allongées. Ainsi toutes les aubes positionnées au moins en partie en regard de l'obstacle aérodynamique présentent une corde allongée, permettant d'optimiser la géométrie complète du stator et d'adapter la corde des aubes au chargement qu'elles subissent.

Dans une forme de réalisation, l'obstacle aérodynamique s'étendant sensiblement autour de la position angulaire 0°, au moins une majorité des aubes positionnées à une position angulaire comprise entre 315° et 45° autour de la position angulaire 0° sont des aubes allongées. Une telle configuration permet d'adapter la corde de l'ensemble des aubes positionnées au moins en partie en regard d'un mât de liaison par exemple dans le cas d'une turbomachine fixée sous une aile d'un avion.

Dans une forme de réalisation, l'obstacle aérodynamique s'étendant sensiblement autour de la position angulaire 0°, l'ensemble des aubes positionnées à une position angulaire comprise entre 315° et 45° autour de la position angulaire 0° sont des aubes allongées. Une telle configuration permet d'adapter la corde de l'ensemble des aubes positionnées au moins en partie en regard d'un mât de liaison par exemple dans le cas d'une turbomachine fixée sous une aile d'un avion.

De manière alternative, l'obstacle aérodynamique s'étendant sensiblement autour de la position angulaire 90°, au moins une majorité des aubes positionnées à une position angulaire comprise entre 45° et 135° sont des aubes allongées.

Dans une forme de réalisation, l'obstacle aérodynamique s'étendant sensiblement autour de la position angulaire 90°, l'ensemble des aubes positionnées à une position angulaire comprise entre 45° et 135° sont des aubes allongées. Une telle configuration permet d'adapter la corde de l'ensemble des aubes positionnées au moins en partie en regard d'un mât de liaison par exemple dans le cas d'une turbomachine fixée latéralement au fuselage d'un avion (à gauche de l'avion dans une vue de face située à l'amont de l'aéronef). Cette configuration permet également d'adapter la corde des aubes à la présence du fuselage lui-même à proximité de la turbomachine.

De manière alternative, l'obstacle aérodynamique s'étendant sensiblement autour de la position angulaire 270°, au moins une majorité des aubes positionnées à une position angulaire comprise entre 225° et 315° sont des aubes allongées.

Dans une forme de réalisation, l'obstacle aérodynamique s'étendant sensiblement autour de la position angulaire 270°, l'ensemble des aubes positionnées à une position angulaire comprise entre 225° et 315° sont des aubes allongées. Une telle configuration permet d'adapter la corde de l'ensemble des aubes positionnées au moins en partie en regard d'un mât de liaison par exemple dans le cas d'une turbomachine fixée latéralement au fuselage d'un avion (à droite de l'avion dans une vue de face située à l'amont de l'aéronef). Cette configuration permet également d'adapter la corde des aubes à la présence du fuselage lui-même à proximité de la turbomachine.

De manière préférée, le stator de la turbomachine comprend au moins une aube de stator ayant une troisième corde, appelée aube raccourcie, la troisième corde étant plus petite que la première corde, de manière à limiter le risque de sous chargement d'une aube, ladite au moins une aube raccourcie est positionnée dans une plage angulaire diamétralement opposée à la plage angulaire d'interférence. Chaque aube présentant ainsi une troisième corde réduite permet de limiter le risque de sous-charge d'une aube dont la corde serait trop grande au regard du flux d'air qu'elle reçoit.

Dans une forme de réalisation, chaque aube raccourcie est diamétralement opposée à une aube allongée, permettant une géométrie optimale de l'ensemble du stator pour permettre des performances optimales de la turbomachine.

De préférence, le terme diamétralement opposé est déterminé par rapport à l'axe de la turbomachine.

De manière préférée, la plage angulaire d'interférence est exempte d'aube raccourcie, chaque aube de stator positionnée dans la plage angulaire d'interférence ayant une corde au moins égale à la corde d'une aube classique. Autrement dit, chaque aube raccourcie est positionnée en dehors de la plage angulaire d'interférence de manière à s'affranchir de la présence d'une aube raccourcie qui serait particulièrement surchargée en vis-à-vis de l'obstacle aérodynamique.

De préférence, chaque aube positionnée hors de la plage angulaire d'interférence possède une corde inférieure ou égale à la corde d'une aube classique. Cela permet de limiter tout risque de sous-charge d'une aube qui ne serait pas en vis-à-vis de l'obstacle aérodynamique et qui serait soumise à un flux qui ne serait pas particulièrement important.

Dans une forme de réalisation préférée, le nombre d'aubes allongées représente moins de 50% du nombre total d'aubes de stator, dans un même plan transversal. De préférence, le nombre d'aubes allongées représente moins de 40%, de préférence moins de 30%, de préférence encore moins de 20%, du nombre d'aubes de stator total dans un même plan transversal. Ainsi, les aubes allongées permettant de redresser un flux d'air particulièrement perturbé par la présence d'un obstacle aérodynamique sont utilisée avec parcimonie pour ne pas pénaliser les performances aérodynamiques.

De préférence, la première corde présentant une longueur, la troisième corde présente une longueur comprise entre 70% et 95% de la longueur de la première corde. Une telle troisième corde permet d'optimiser la corde de l'aube au chargement tout en limitant la différence de corde et donc le risque de perturbations locales.

De préférence, la première corde présentant une longueur, la deuxième corde présente une longueur comprise entre 105% et 130% de la longueur de la première corde. Une telle deuxième corde permet d'optimiser la corde de l'aube au chargement tout en limitant la différence de corde et donc le risque de perturbations locales.

De préférence, la différence de corde entre deux aubes de stator adjacentes est inférieure ou égale à 25%. Une différence de corde limitée pour deux aubes adjacentes permet de limiter les risques de perturbations locales de l'écoulement qui pourraient nuire au fonctionnement du stator.

De manière préférée, chaque aube de stator présentant une épaisseur maximale dans le plan de révolution, l'épaisseur relative d'une aube de stator correspondant au rapport de l'épaisseur maximale sur la corde, la différence d'épaisseur relative entre deux aubes de stator adjacentes ayant des cordes différentes est inférieure ou égale à 25%. Une telle différence d'épaisseur relative permet de limiter les perturbations locales de l'écoulement entre deux aubes adjacentes de cordes différentes.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un aéronef comprenant une turbomachine non carénée selon une forme de réalisation de l'invention et un obstacle aérodynamique.
La [Fig.2] est une représentation schématique de la turbomachine non carénée de la [Fig.1] comprenant un rotor et un stator.
La [Fig.3] est une représentation schématique d'aubes du stator de la [Fig.2], en coupe dans un plan de révolution autour d'un axe longitudinal X.
La [Fig.4] est une représentation schématique dans un plan transversal à l'axe longitudinal X, des aubes du stator de la [Fig.3] dans l'exemple d'un obstacle aérodynamique positionné à une position angulaire 0°.
La [Fig.5] est une représentation schématique de la corde de chaque aube du stator de la [Fig.3] dans le plan de révolution.
La [Fig.6] est un graphique représentant l'évolution de la corde de chaque aube du rotor de la [Fig.3] en fonction de leur position angulaire dans le plan transversal.
La [Fig.7] est une représentation schématique d'un deuxième exemple de répartition d'aubes allongées et raccourcies en fonction de leur position angulaire dans le cas d'un obstacle aérodynamique positionné autour de 270°.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention est décrite dans ce document en référence à une turbomachine montée dans un avion, cependant il va de soi qu'elle s'applique à tout type d'aéronef.

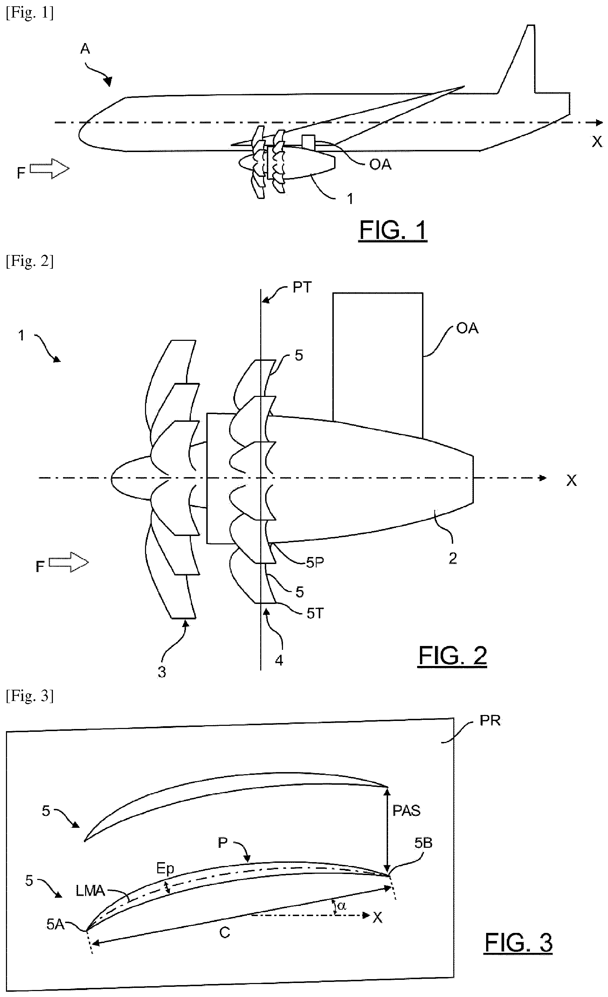

L'aéronef A selon l'invention est représenté sur les figures 1 et 2. A cet effet, en référence à la [Fig.1], l'aéronef A (dans cet exemple un avion) comprend une turbomachine 1 s'étendant longitudinalement selon un axe X et permettant de déplacer l'avion à partir d'un flux d'air F entrant dans la turbomachine 1 et circulant d'amont en aval. Par la suite, les termes « amont » et « aval » sont définis par rapport à l'axe longitudinal X orienté d'amont en aval.

Toujours en référence à l'exemple de la [Fig.1], l'aéronef A comprend également un obstacle aérodynamique OA à proximité de la turbomachine 1, monté en aval de cette dernière. L'obstacle aérodynamique OA est positionné au moins en partie en regard de la turbomachine 1. Par l'expression « en regard », on entend que l'obstacle aérodynamique OA et la turbomachine 1 sont alignés par rapport à l'axe X. Le terme « obstacle aérodynamique » décrit tout dispositif ou système monté à proximité de la turbomachine 1 et étant susceptible de perturber le flux d'air F issu de la turbomachine 1 et circulant d'amont en aval. A titre d'exemple non limitatif, un tel obstacle aérodynamique OA peut être une portion de fuselage, une aile de l'aéronef A ou tout dispositif structurel monté sur l'aéronef A. Dans ce document, comme représenté sur les figures 1 et 2, l'obstacle aérodynamique OA est par exemple un mât de liaison de la turbomachine 1 à l'aéronef A. Ce document présente l'exemple d'un obstacle aérodynamique OA monté en aval de la turbomachine 1, cependant il va de soi que l'obstacle aérodynamique OA pourrait être monté en amont de la turbomachine 1.

De manière connue, en référence à la [Fig.2], la turbomachine 1 comprend une veine primaire délimitée par un carter, désigné « carter inter-veine » 2 et alimentée par une soufflante amont, désignée rotor 3, montée rotative autour de l'axe X. Le rotor 3 permet d'accélérer le flux d'air F d'amont vers l'aval. En pratique, l'accélération du flux d'air F permet de générer un effort de poussée permettant le déplacement de l'aéronef A.

Selon l'invention, la turbomachine 1 est non carénée, c'est-à-dire qu'elle est dépourvue de carter extérieur. Une telle configuration de la turbomachine 1 est connue de l'homme du métier sous la désignation générique « open rotor » et ne sera pas décrite plus en détails dans ce document.

Toujours en référence à la [Fig.2], la turbomachine 1 comprend un stator 4, monté en aval du rotor 3 et permettant de redresser le flux d'air F accéléré par le rotor 3. Le stator 4 comprend une pluralité d'aubes de stator 5, également désignées « redresseurs », s'étendant radialement par rapport à l'axe longitudinal X entre un pied 5P relié au carter inter-veine 2 et une tête 5T libre. Dans l'exemple représenté, l'entrée d'air du flux dans la veine primaire est située entre le rotor 3 et le stator 4.

Dans cette forme de réalisation, la turbomachine 1 comporte uniquement un rotor 3 et un stator 4 afin de posséder une structure simple et légère. De plus, le couple rotor 3/stator 4 est monté à l'amont de la turbomachine 1 afin de former une turbomachine du type « puller » (signifiant « tracteur » en langue anglaise). Il va de soi que le couple rotor 3/stator 4 pourrait être monté à l'aval de la turbomachine 1 afin de former une turbomachine du type « pusher » (signifiant « pousseur » en langue anglaise).

De manière connue, en référence à la [Fig.3], chaque aube de stator 5 comprend un bord d'attaque 5A, correspondant à l'extrémité située en amont et entrant en premier en contact avec le flux d'air F, et un bord de fuite 5B, situé en aval. Chaque aube de stator 5 présente un profil qui est déterminé, en coupe, dans un plan de révolution PR autour de l'axe longitudinal X de la turbomachine 1. Le plan de révolution PR est déterminé pour une distance radiale prédéterminée. En pratique, chaque aube de stator 5 comprend une pluralité de profils caractéristiques, déterminés dans une pluralité de plans de révolution autour de l'axe longitudinal X de la turbomachine, le long de la turbomachine 1.

Dans le plan de révolution PR, en référence à la [Fig.3], chaque aube de stator 5 présente un profil P allongé depuis le bord d'attaque 5A jusqu'au bord de fuite 5B. De manière connue, le profil P est défini suivant une pluralité de caractéristiques géométriques comme par exemple une longueur et une épaisseur. Dans cet exemple, le profil P d'une aube de stator 5 est caractérisé par la distance entre le bord d'attaque 5A et le bord de fuite 5B, désignée corde C, et l'épaisseur maximale Ep. Dans cet exemple, l'épaisseur maximale Ep est définie orthogonalement à la direction de ligne moyenne de l'aube LMA. Comme illustré à la [Fig.3], celle ligne moyenne LMA (également connue de l'homme du métier sous sa désignation de ligne squelette ou de ligne de cambrure) relie le bord d'attaque 5A au bord de fuite 5B et est équidistante de l'intrados et de l'extrados. De même, toujours en référence à la [Fig.3], une aube de stator 5 est caractérisée par l'inclinaison de sa corde C par rapport à l'axe longitudinal X de la turbomachine 1. Par la suite, pour un profil P, on définit un angle de calage α entre l'axe longitudinal X et la corde C. Enfin, un stator 4 est caractérisé par son pas PAS correspondant à l'écartement entre les bords de fuite 5B de deux aubes de stator 5 adjacentes comme illustré à la [Fig.3].

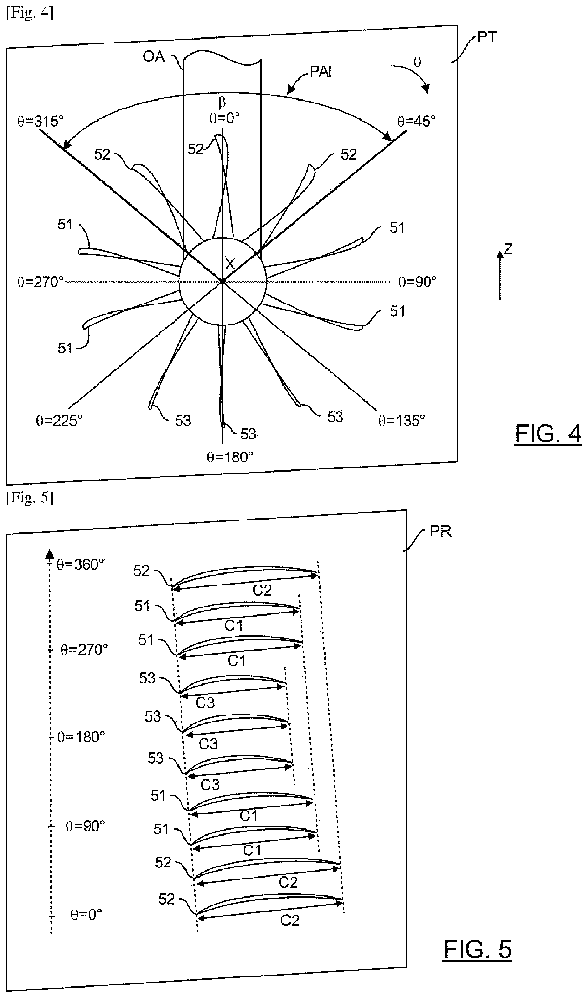

En référence à la [Fig.4], les aubes de stator 5 sont réparties angulairement autour de l'axe longitudinal X dans un plan transversal PT à l'axe longitudinal X, représenté sur la [Fig.2]. Chaque aube de stator 5 est définie, dans le plan transversal PT, par une position angulaire θ, comprise dans une plage angulaire s'étendant entre 0° et 360°. Dans cet exemple, la position angulaire 0° est définie en position haute par rapport à un axe vertical Z s'étendant du bas vers le haut, comme représenté sur la [Fig.4]. De même, les positions angulaires θ sont définies de manière croissante entre 0° et 360° selon le sens horaire de rotation autour de l'axe longitudinal X depuis la position 0°.

En référence aux figures 4 et 5, le stator 4 comprend, dans le plan transversal PT, une pluralité d'aubes de stator 5 ayant une première corde C1. De telles aubes de stator 5 sont appelées « aubes classiques » 51. La première corde C1 est de préférence comprise entre 200 et 600 mm.

Le stator 4 de la turbomachine 1 selon l'invention comprend en outre une pluralité d'aubes de stator 5 ayant une deuxième corde C2, la deuxième corde C2 étant plus grande que la première corde C1 dans le plan transversal PT, comme représenté sur la [Fig.5]. De telles aubes de stator 5 sont appelées « aubes allongées » 52. De préférence, la deuxième corde C2 allongée présente une longueur comprise entre 105% et 130 % de la longueur de la première corde C1. De préférence encore, la longueur de la deuxième corde C2 allongée est comprise entre 105% et 115% de la longueur de la première corde C1. Dans cet exemple, le stator 4 comprend une pluralité d'aubes allongées 52, cependant il va de soi que le stator 4 pourrait tout aussi bien comprendre une unique aube allongée 52.

Selon l'invention, comme représenté sur la [Fig.4], chaque aube allongée 52 est positionnée angulairement au moins en partie dans une plage angulaire d'interférence PAI, définie en regard de l'obstacle aérodynamique OA. Autrement dit, l'obstacle aérodynamique OA et les aubes allongées 52 sont alignés, au moins partiellement, par rapport à l'axe longitudinal X. Les aubes allongées 52 permettent d'augmenter le redressement du flux d'air issu du rotor 3 dans la plage angulaire d'interférence PAI en vis-à-vis de l'obstacle aérodynamique OA, de manière à limiter les perturbations du flux d'air F en aval de la turbomachine 1 dans l'axe de l'obstacle aérodynamique OA. La géométrie de chaque aube de stator 5 est ainsi adaptée en fonction de son chargement. Une corde C plus longue permet d'éviter la surcharge d'une aube de stator 5 qui serait particulièrement sollicitée.

Autrement dit, de préférence, aucune aube allongée 52 n'est positionnée entièrement dans une plage angulaire en dehors de la plage angulaire d'interférence PAI. En effet, lorsqu'une aube n'est pas en vis-à-vis de l'obstacle aérodynamique OA, celle-ci n'est pas soumise à des perturbations plus importantes et il n'est pas nécessaire de redresser le flux d'air de manière plus importante.

Dans cet exemple représenté sur la [Fig.4], l'obstacle aérodynamique OA, c'est-à-dire le mât de liaison, s'étend verticalement et est fixé à une portion supérieure de la turbomachine 1 selon un axe vertical Z, c'est-à-dire, à une position angulaire de 0°.

Dans cet exemple, comme représenté sur la [Fig.4], le stator 4 comprend dans la plage angulaire d'interférence PAI trois aubes allongées 52, qui sont soit entièrement, soit partiellement en regard de l'obstacle aérodynamique OA.

Ce document présente l'exemple d'un stator 4 comprenant trois aubes allongées 52, cependant il va de soi que le stator 4 pourrait tout aussi bien comprendre un nombre différent d'aubes allongées 52. Autrement dit, il va de soi que la plage d'interférence PAI pourrait tout aussi bien comprendre une unique aube allongée 52, deux aubes allongées 52 ou un nombre supérieur à trois aubes allongées 52. Il va de soi également que la plage d'interférence PAI pourrait comprendre à la fois des aubes classiques 51 et des aubes allongées 52.

A titre d'exemple, le stator 4 comprenant dix aubes de stator 5, reparties angulairement autour de l'axe longitudinal X, les aubes allongées 52 correspondant aux aubes de stator 5 en regard de l'obstacle aérodynamique OA, couvrent une plage angulaire comprise entre 315° et 45° selon le sens de rotation horaire comme illustré à la [Fig.4].

De manière préférée, le stator 4 de la turbomachine 1 comprend également une pluralité d'aubes de stator 5 ayant une troisième corde C3, la troisième corde C3 étant plus petite que la première corde C1 dans le plan transversal PT, comme représenté sur la [Fig.5]. De telles aubes de stator 5 sont appelées « aubes raccourcies » 53. De préférence, la troisième corde C3 raccourcie présente une longueur comprise entre 70% et 95 % de la longueur de la première corde C1. De préférence encore, la longueur de la troisième corde C3 raccourcie est comprise entre 85% et 95% de la longueur de la première corde C1.

Dans cet exemple, en référence à la [Fig.4], chaque aube raccourcie 53 est positionnée angulairement, dans le plan transversal PT, de manière à appartenir à une plage angulaire diamétralement opposée à la plage angulaire d'interférence PAI. En particulier, dans cet exemple, chaque aube raccourcie 53 est diamétralement opposée à une aube allongée 52. Dans une forme de réalisation, le stator 4 comprend une aube raccourcie 53 pour chaque aube allongée 52. Les aubes raccourcies 53 permettent d'équilibrer l'ensemble du stator 4 tout en limitant le risque de sous-chargement d'une aube de stator 5 qui serait particulièrement moins sollicitée. Ce document présente l'exemple d'une aube raccourcie 53 positionnée de manière diamétralement opposée à chaque aube allongée 52, cependant il va de soi que le stator 4 pourrait également comprendre une (ou plusieurs) aube raccourcie 53 qui ne serait pas diamétralement opposée à une aube allongée 52. En particulier, dans le cas d'un stator 4 comprenant un nombre impair d'aubes, aucun positionnement diamétralement opposé ne serait réalisé.

De manière préférée, la plage angulaire d'interférence PAI est exempte d'aube raccourcie 53, de manière à s'affranchir de la présence dans la plage angulaire d'interférence PAI d'une aube de stator 5 qui serait surchargée par un flux d'air perturbé par la présence de l'obstacle aérodynamique OA. Autrement dit, chaque aube de stator 5 positionnée dans la plage angulaire d'interférence PAI possède une corde au moins égale à la corde d'une aube classique 51 et l'ensemble des aubes raccourcies 53 est positionné en dehors de la plage angulaire d'interférence PAI.

De préférence encore, chaque aube positionnée hors de la plage angulaire d'interférence PAI possède une corde inférieure ou égale à la corde d'une aube classique 51. Autrement dit, l'ensemble des aubes de stator 5 positionnées hors de la plage angulaire d'interférence PAI sont des aubes classiques 51 ou des aubes raccourcies 53. Autrement dit, aucune aube allongée 52 n'est positionnée en dehors de la plage angulaire d'interférence PAI.

Dans cet exemple, comme représenté sur la [Fig.4], le stator 4 comprend dans la plage angulaire diamétralement opposée à la plage angulaire d'interférence PAI, trois aubes raccourcies 53, positionnée chacune diamétralement en vis-à-vis de l'une des trois aubes allongées 52.

Ce document présente l'exemple d'un stator 4 comprenant trois aubes raccourcies 53, puisqu'il comprend trois aubes allongées 52. Cependant, il va de soi que le stator 4 pourrait tout aussi bien comprendre un nombre différent d'aubes raccourcies 53, par exemple une unique aube raccourcie 53, deux aubes raccourcies 53 ou un nombre supérieur à trois aubes raccourcies 53.

Dans une forme de réalisation, le nombre d'aubes allongées 52 représente moins de 50% du nombre total d'aubes de stator 5, dans un même plan transversal. De préférence, le nombre d'aubes allongées 52 représente moins de 40% du nombre total d'aubes de stator 5, dans un même plan transversal, de préférence moins de 30%, de préférence encore moins de 20% du nombre d'aubes de stator 5 total dans un même plan transversal. Ainsi, seules les aubes de stator 5 présentes au moins partiellement en vis-à-vis de l'obstacle aérodynamique OA sont des aubes allongées 52, ce qui permet de ne pas allonger la corde d'une aube de stator 5 de manière inutile.

A titre d'exemple, comme illustré à la [Fig.4], le stator 4 comprenant dix aubes de stator 5 reparties angulairement autour de l'axe longitudinal X, les aubes allongées 52 correspondant aux aubes de stator 5 positionnées dans une plage angulaire comprise entre 315° et 45° selon le sens de rotation horaire, les aubes raccourcies 53 couvrent une plage angulaire comprise entre 135° et 225° selon le sens de rotation horaire.

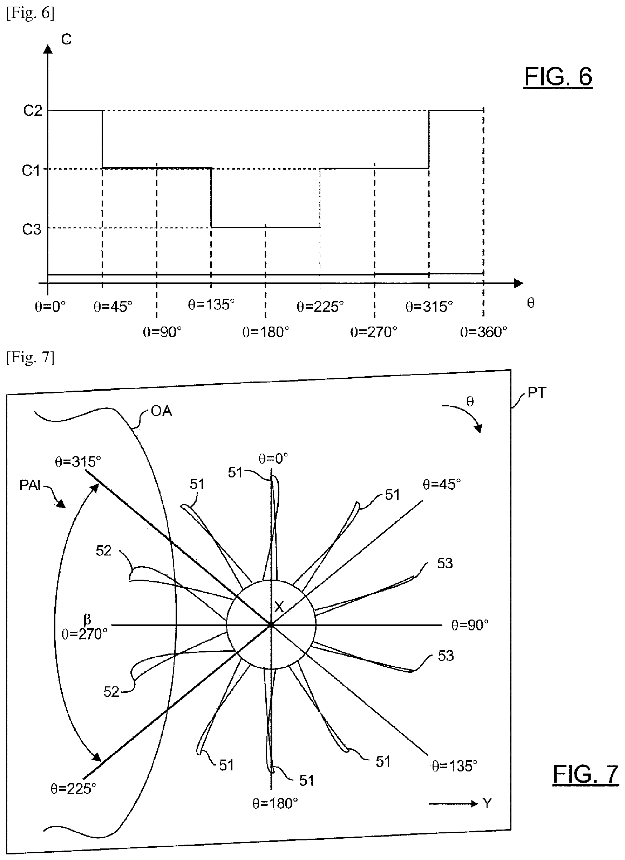

La [Fig.6] est un graphique représentant l'évolution de la corde C1, C2, C3 de chaque aube de stator 5 en fonction de sa position angulaire θ, dans un exemple de réalisation. En résumé dans cet exemple, sur la plage angulaire depuis 0° jusqu'à 360° :
- chaque aube de stator 5 dont la position angulaire est comprise entre 0° et 45° est une aube allongée 52,
- chaque aube de stator 5 dont la position angulaire est comprise entre 45° et 135° est une aube classique 51,
- chaque aube de stator 5 dont la position angulaire est comprise entre 135° et 225° est une aube raccourcie 53,
- chaque aube de stator 5 dont la position angulaire est comprise entre 225° et 315° est une aube classique 51, et
- chaque aube de stator 5 dont la position angulaire est comprise entre 315° et 360° (donc 0°) est une aube allongée 52.

Ce document présente l'exemple dans lequel chaque plage angulaire comprend des aubes similaires classiques 51, allongées 52 ou raccourcies 53, cependant il va de soi que chaque plage angulaire, telle que définie ci-dessus pourrait tout aussi bien comprendre de manière alternative une combinaison d'aubes classiques 51 et d'aubes allongées 52 ou une combinaison d'aubes classiques 51 et d'aubes raccourcies 53.

De manière préférée, la différence de corde C1, C2, C3 entre deux aubes de stator 5 adjacentes est inférieure à 50%, de préférence encore, inférieure à 25%. Une telle caractéristique permet de ne pas affecter les performances de la turbomachine 1, en particulier, les performances locales de l'écoulement au voisinage de chaque aube de stator 5.

Ce document présente l'exemple d'un obstacle aérodynamique OA s'étendant verticalement et étant fixé à une portion supérieure de la turbomachine 1, c'est-à-dire s'étendant autour de la position angulaire 0°. Cependant il va de soi que l'obstacle aérodynamique OA pourrait tout aussi bien s'étendre différemment par rapport à la turbomachine 1, c'est-à-dire s'étendre autour d'une position angulaire β différente de 0°, par exemple à une position angulaire de l'ordre de 270° (représentée sur la [Fig.7]).

A titre d'exemple, comme représenté sur la [Fig.7], dans le cas d'une turbomachine 1 installée sous une aile droite de l'aéronef A par exemple (le terme « droite » s'entendant selon un axe transversal Y, dans une vue de face à l'amont de l'aéronef A), l'obstacle aérodynamique OA peut correspondre par exemple au fuselage de l'avion, présent à gauche de la turbomachine 1. Dans ce cas, la plage angulaire d'interférence PAI est par exemple comprise entre 225° et 315° dans le sens de rotation horaire.

Aussi dans cet exemple, sur la plage angulaire depuis 0° jusqu'à 360° :
- chaque aube de stator 5 dont la position angulaire est comprise entre 0° et 45° est une aube classique 51,
- chaque aube de stator 5 dont la position angulaire est comprise entre 45° et 135° est une aube raccourcie 53,
- chaque aube de stator 5 dont la position angulaire est comprise entre 135° et 225° est une aube classique 51,
- chaque aube de stator 5 dont la position angulaire est comprise entre 225° et 315° est une aube allongée 52, et
- chaque aube de stator 5 dont la position angulaire est comprise entre 315° et 360° (donc 0°) est une aube classique 51.

Ce document présente l'exemple de plages angulaires comprenant des aubes d'un même type (classique 51, allongées 52 ou raccourcies 53), cependant il va de soi que la plage angulaire entre 45° et 135° pourrait comprendre à la fois une ou plusieurs aube(s) classique(s) 51 et une ou plusieurs aube(s) raccourcie(s) 53 et la plage angulaire entre 225° et 315° pourrait comprendre à la fois une ou plusieurs aube(s) classique(s) 51 et une ou plusieurs aube(s) allongée(s) 52.

De même, ce document présente l'exemple de plages angulaires comprenant chacune des aubes de stator 5 présentant une même corde C1, C2, C3, cependant il va de soi que le stator 4 pourrait tout aussi bien comprendre une pluralité d'aubes de stator 5 présentant chacune une corde C propre allongée ou raccourcie. Dans une telle configuration, le stator 4 comprendrait autant de valeurs de cordes C que d'aubes de stator 5. Un tel stator 4 présenterait des performances optimales puisque chaque aube de stator 5 aurait une corde C adaptée à son environnement propre.

De manière préférée, le pas PAS (représenté sur la [Fig.3]) entre deux aubes de stator 5 est indépendant de la corde C, aussi si le pas PAS est identique mais que la corde C est différente entre deux aubes de stator 5 adjacentes, alors le pas relatif (c'est-à-dire le rapport entre le pas PAS et la corde C varie en fonction de la corde C) est différent entre deux aubes de stator 5. De manière alternative, le pas PAS entre deux aubes de stator 5 présentant des cordes C différentes pourrait être différent.

De préférence, l'épaisseur maximale Ep (représenté sur la [Fig.3]) des aubes de stator 5 est différente suivant s'il s'agit d'une aube classique 51, d'une aube allongée 52 ou d'une aube raccourcie 53 de manière à présenter une épaisseur relative (c'est-à-dire un rapport entre l'épaisseur maximale Ep et la corde C de l'aube de stator 5) constante. Une telle caractéristique permet de garantir les caractéristiques mécaniques de chaque aube de stator 5 (souplesse, fréquence propre, etc.). De manière alternative, les aubes classiques 51, les aubes allongées 52 et les aubes raccourcies 53 ont une même épaisseur maximale Ep de manière à limiter la variation de section entre deux aubes de stator 5 adjacentes, ce qui limite les perturbations locales de l'écoulement.

De manière optionnelle, la variation de corde C entre deux aubes de stator 5 peut être couplée à une variation de l'angle de calage α (représenté sur la [Fig.3]) des aubes de stator 5 comme décrit précédemment. Une telle modification permet avantageusement de limiter la distorsion aérodynamique d'un flux d'air appliqué d'aval en amont de la turbomachine 1 sur la roue du stator 4. par exemple lorsque l'avion est en vol.

Les cordes variables sur le stator d'une turbomachine non carénée permettent avantageusement de prendre en compte les effets que peuvent avoir un obstacle aérodynamique à proximité de la turbomachine et de son flux d'air sortant. Allonger la corde des aubes présentes en regard de cet obstacle aérodynamique permet d'améliorer de manière significative la performance de chaque aube du stator de manière à charger de manière plus importante les aubes positionnées en vis-à-vis de l'obstacle aérodynamique et ainsi d'améliorer le redressement du flux d'air issu du rotor et donc la poussée de l'aéronef. Une répartition des aubes classiques, des aubes allongées et des aubes réduites par plages angulaires permet de limiter les contraintes industrielles de réalisation et de montage du stator en limitant le nombre d'aubes présentant des cordes différentes tout en permettant l'adaptation du chargement de chaque aube suivant son environnement direct.

Il est décrit dans ce document un aéronef dans lequel une turbomachine comprend des aubes de stator dont la corde est allongée pour adapter les aubes soumises à une charge plus importante du fait de la présence d'un obstacle aérodynamique, cependant il va de soi que la corde des aubes pourrait tout aussi bien être adaptée en fonction de la charge que voient les aubes en phase de décollage ou d'atterrissage ou bien encore en fonction de la charge que voient les aubes positionnées en vis-à-vis des pales montantes du rotor lors de leur rotation.

## Revendications

1. Aéronef (A) comprenant :
• au moins une turbomachine (1) non carénée pour la propulsion de l'aéronef (A), la turbomachine (1) s'étendant selon un axe longitudinal (X) et étant configurée pour accélérer un flux d'air (F) circulant d'amont en aval, la turbomachine (1) comprenant un rotor (3) et un stator (4), monté en aval du rotor (3), le stator (4) comprenant une pluralité d'aubes de stator (5) pour redresser le flux d'air issu du rotor (3), s'étendant radialement par rapport à l'axe longitudinal (X) et réparties angulairement autour de l'axe longitudinal (X), chaque aube de stator (5) comprenant un bord d'attaque (5A) et un bord de fuite (5B) définissant entre eux une corde (C) dans un plan de révolution (PR) défini par rapport à l'axe longitudinal (X), chaque aube de stator (5) étant définie, dans un plan transversal (PT) à l'axe longitudinal (X), par une position angulaire (θ),
• au moins un obstacle aérodynamique (OA), positionné à proximité de la turbomachine (1), l'obstacle aérodynamique (OA) entrainant une modification de la circulation du flux d'air (F) en aval des aubes de stator (5),
• l'aéronef (A) étant **caractérisé par le fait que** le stator (4) de la turbomachine (1) comprend des aubes de stator (5) ayant une première corde (C1), appelées aubes classiques (51), et au moins une aube de stator (5) ayant une deuxième corde (C2), plus grande que la première corde (C1), appelée aube allongée (52), ladite au moins une aube allongée (52) étant positionnée dans une plage angulaire d'interférence (PAI) définie en regard de l'obstacle aérodynamique (OA), de manière à augmenter le redressement du flux d'air issu du rotor (3) dans la plage angulaire d'interférence (PAI).

2. Aéronef (A) selon la revendication 1, comprenant un mât de liaison de la turbomachine (1) à l'aéronef (A), ledit mât (M) forme l'obstacle aérodynamique (OA).

3. Aéronef (A) selon l'une des revendications 1 et 2, dans lequel le stator (4) comprend au moins deux aubes allongées (52) positionnées dans la plage angulaire d'interférence (PAI).

4. Aéronef (A) selon l'une des revendications 1 à 3, dans lequel les positions angulaires (θ) étant définies suivant un sens de rotation horaire sur une plage angulaire de 0° à 360°, dont la position angulaire 0° étant définie en position haute par rapport à un axe vertical, l'obstacle aérodynamique (OA) s'étendant sensiblement autour d'une position angulaire (β), l'ensemble des aubes de stator (5) positionnées à une position angulaire (θ) comprise entre -45° et +45° autour de la position angulaire (β) sont des aubes allongées (52).

5. Aéronef (A) selon l'une des revendications 1 à 4, dans lequel le stator (4) de la turbomachine (1) comprend au moins une aube de stator (5) ayant une troisième corde (C3), appelée aube raccourcie (53), la troisième corde (C3) étant plus petite que la première corde (C1) de manière à limiter le risque de sous chargement d'une aube, ladite au moins une aube raccourcie (53) est positionnée dans une plage angulaire diamétralement opposée à la plage angulaire d'interférence (PAI).

6. Aéronef (A) selon la revendication 5, dans lequel chaque aube raccourcie (53) est diamétralement opposée à une aube allongée (52).

7. Aéronef (A) selon l'une des revendications 5 et 6, dans lequel, la première corde (C1) présentant une longueur, la troisième corde (C3) présente une longueur comprise entre 70% et 95% de la longueur de la première corde (C1).

8. Aéronef (A) selon l'une des revendications 1 à 7, dans lequel, la première corde (C1) présentant une longueur, la deuxième corde (C2) présente une longueur comprise entre 105% et 130% de la longueur de la première corde (C1).

9. Aéronef (A) selon l'une des revendications 1 à 8, dans lequel la différence de corde (C) entre deux aubes de stator (5) adjacentes est inférieure ou égale à 25%.

10. Aéronef (A) selon l'une des revendications 1 à 9, dans lequel, chaque aube de stator (5) présentant une épaisseur maximale (Ep) dans le plan de révolution (PR), l'épaisseur relative d'une aube de stator (5) correspondant au rapport de l'épaisseur maximale (Ep) sur la corde (C), la différence d'épaisseur relative entre deux aubes de stator (5) adjacentes ayant des cordes (C1, C2, C3) différentes, est inférieure ou égale à 25%.

## Patentansprüche

1. Flugzeug (A), umfassend:
• mindestens eine nicht verkleidete Turbomaschine (1) zum Antrieb des Flugzeugs (A), wobei sich die Turbomaschine (1) gemäß einer Längsachse (X) erstreckt und ausgelegt ist, um einen von stromaufwärts nach stromabwärts strömenden Luftstrom (F) zu beschleunigen, wobei die Turbomaschine (1) einen Rotor (3) und einen stromabwärts vom Rotor (3) angebrachten Stator (4) umfasst, wobei der Stator (4) eine Vielzahl von Statorschaufeln (5) umfasst, um den vom Rotor (3) ausgehenden Luftstrom auszurichten, die sich radial zur Längsachse (X) erstrecken und winklig um die Längsachse (X) verteilt sind, wobei jede Statorschaufel (5) eine Vorderkante (5A) und eine Hinterkante (5B) umfasst, die zwischen sich eine Sehne (C) in einer relativ zur Längsachse (X) definierten Rotationsebene (PR) bilden, wobei jede Statorschaufel (5) in einer zur Längsachse (X) quer verlaufenden Ebene (PT) durch eine Winkelposition (θ) definiert ist,
• mindestens ein aerodynamisches Hindernis (OA), das in der Nähe der Turbomaschine (1) positioniert ist, wobei das aerodynamische Hindernis (OA) eine Veränderung der Strömung des Luftstroms (F) stromabwärts der Statorschaufeln (5) bewirkt,
• wobei das Flugzeug (A) **dadurch gekennzeichnet ist, dass** der Stator (4) der Turbomaschine (1) Statorschaufeln (5) mit einer ersten Sehne (C1) umfasst, die als klassische Schaufeln (51) bezeichnet werden, und mindestens eine Statorschaufel (5) mit einer zweiten Sehne (C2), die größer ist als die erste Sehne (C1), die als verlängerte Schaufel (52) bezeichnet wird, wobei die mindestens eine verlängerte Schaufel (52) in einem dem aerodynamischen Hindernis (OA) zugewandten definierten Interferenzwinkelbereich (PAI) positioniert ist, um die Ausrichtung des vom Rotor (3) ausgehenden Luftstroms im Interferenzwinkelbereich (PAI) zu verstärken.

2. Flugzeug (A) nach Anspruch 1, umfassend einen Verbindungsmast der Turbomaschine (1) mit dem Flugzeug (A), wobei der Mast (M) das aerodynamische Hindernis (OA) bildet.

3. Flugzeug (A) nach einem der Ansprüche 1 und 2, wobei der Stator (4) mindestens zwei verlängerte Schaufeln (52) umfasst, die im Interferenzwinkelbereich (PAI) positioniert sind.

4. Flugzeug (A) nach einem der Ansprüche 1 bis 3, wobei die Winkelpositionen (θ) im Uhrzeigersinn in einem Winkelbereich von 0° bis 360° definiert sind, wobei die Winkelposition 0° in oberer Position in Bezug auf eine vertikale Achse definiert ist, wobei sich das aerodynamische Hindernis (OA) im Wesentlichen um eine Winkelposition (β) erstreckt, wobei alle Statorschaufeln (5), die in einer Winkelposition (θ) zwischen -45° und +45° um die Winkelposition (β) positioniert sind, verlängerte Schaufeln (52) sind.

5. Flugzeug (A) nach einem der Ansprüche 1 bis 4, wobei der Stator (4) der Turbomaschine (1) mindestens eine Statorschaufel (5) mit einer dritten Sehne (C3) umfasst, die als verkürzte Schaufel (53) bezeichnet wird, wobei die dritte Sehne (C3) kleiner ist als die erste Sehne (C1), um das Risiko einer Unterbelastung einer Schaufel zu begrenzen, wobei die mindestens eine verkürzte Schaufel (53) in einem Winkelbereich positioniert ist, der dem Interferenzwinkelbereich (PAI) diametral gegenüberliegt.

6. Flugzeug (A) nach Anspruch 5, wobei jede verkürzte Schaufel (53) einer verlängerten Schaufel (52) diametral gegenüberliegt.

7. Flugzeug (A) nach einem der Ansprüche 5 und 6, wobei, wenn die erste Sehne (C1) eine Länge aufweist, die dritte Sehne (C3) eine Länge zwischen 70 % und 95 % der Länge der ersten Sehne (C1) aufweist.

8. Flugzeug (A) nach einem der Ansprüche 1 bis 7, wobei, wenn die erste Sehne (C1) eine Länge aufweist, die zweite Sehne (C2) eine Länge zwischen 105 % und 130 % der Länge der ersten Sehne (C1) aufweist.

9. Flugzeug (A) nach einem der Ansprüche 1 bis 8, wobei die Sehnendifferenz (C) zwischen zwei benachbarten Statorschaufeln (5) kleiner oder gleich 25 % ist.

10. Flugzeug (A) nach einem der Ansprüche 1 bis 9, wobei, wenn jede Statorschaufel (5) eine maximale Dicke (Ep) in der Rotationsebene (PR) aufweist, die relative Dicke einer Statorschaufel (5) dem Verhältnis der maximalen Dicke (Ep) zur Sehne (C) entspricht, wobei der relative Dickenunterschied zwischen zwei benachbarten Statorschaufeln (5) mit unterschiedlichen Sehnen (C1, C2, C3) kleiner oder gleich 25 % ist.

## Claims

1. An aircraft (A) comprising:
- at least one unducted turbine engine (1) for the propulsion of the aircraft (A), the turbine engine (1) extending along a longitudinal axis (X) and being configured to accelerate an air flow (F) circulating from upstream to downstream, the turbine engine (1) comprising a rotor (3) and a stator (4) mounted downstream of the rotor (3), the stator (4) comprising a plurality of stator vanes (5) for straightening the air flow coming from the rotor (3) extending radially with respect to the longitudinal axis (X) and distributed angularly about the longitudinal axis (X), each stator vane (5) comprising a leading edge (5A) and a trailing edge (5B) defining between them a chord (C) in a plane of revolution (PR) defined with respect to the longitudinal axis (X), each stator vane (5) being defined, in a plane (PT) transverse to the longitudinal axis (X), by an angular position (θ),
- at least one aerodynamic obstacle (OA), positioned close to the turbine engine (1), the aerodynamic obstacle (OA) causing a change in the circulation of the air flow (F) downstream of the stator vanes (5),
- the aircraft (A) being **characterised by** the fact that the stator (4) of the turbine engine (1) comprises stator vanes (5) having a first chord (C1), referred to as conventional vanes (51), and at least one stator vane (5) having a second chord (C2), larger than the first chord (C1), referred to as elongated vane (52), said at least one elongated vane (52) being positioned in an interference angular range (PAI) defined in relation with the aerodynamic obstacle (OA), so as to increase the straightening of the air flow from the rotor (3) in the interference angular range (PAI).

2. The aircraft (A) as claimed in claim 1, comprising a connecting pylon for connecting the turbine engine (1) to the aircraft (A), said pylon (M) forming the aerodynamic obstacle (OA).

3. The aircraft (A) according to one of claims 1 and 2, wherein the stator (4) comprises at least two elongated vanes (52) positioned within the interference angular range (PAI).

4. The aircraft (A) according to one of claims 1 to 3, wherein the angular positions (θ) are defined in a clockwise direction of rotation over an angular range of 0° to 360°, the angular position 0° being defined as the top position relative to a vertical axis, the aerodynamic obstacle (OA) extending substantially around an angular position (β), the assembly of the stator vanes (5) positioned at an angular position (θ) of between -45° and +45° around the angular position (β) are elongated vanes (52).

5. The aircraft (A) according to one of claims 1 to 4, wherein the stator (4) of the turbine engine (1) comprises at least one stator vane (5) having a third chord (C3), referred to as a shortened vane (53), the third chord (C3) being smaller than the first chord (C1) so as to limit the risk of underloading a vane, said at least one shortened vane (53) is positioned in an angular range diametrically opposed to the interference angular range (PAI).

6. The aircraft (A) as claimed in claim 5, wherein each shortened vane (53) is diametrically opposed to an elongated vane (52).

7. The aircraft (A) according to one of claims 5 and 6, wherein, the first chord (C1) having a length, the third chord (C3) has a length of between 70% and 95% of the length of the first chord (C1).

8. The aircraft (A) according to one of claims 1 to 7, wherein, the first chord (C1) having a length, the second chord (C2) has a length of between 105% and 130% of the length of the first chord (C1).

9. The aircraft (A) according to one of claims 1 to 8, wherein the chord difference (C) between two adjacent stator vanes (5) is less than or equal to 25%.

10. The aircraft (A) according to one of claims 1 to 9, wherein, each stator vane (5) having a maximum thickness (Ep) in the plane of revolution (PR), the relative thickness of a stator vane (5) corresponding to the ratio of the maximum thickness (Ep) to the chord (C), the difference in relative thickness between two adjacent stator vanes (5) having different chords (C1, C2, C3), is less than or equal to 25%.
